# EUROPÄISCHE PATENTSCHRIFT

(11) **EP 3 315 218 B1**
(45) Veröffentlichungstag und Bekanntmachung des Hinweises auf die Patenterteilung: **09.03.2022**
(21) Anmeldenummer: 17181571.5
(22) Anmeldetag: 17.07.2017
(51) Int. Cl.: B08B 7/00, B08B 15/04, B23K 26/00, B23K 26/16, B23K 26/352, B29D 30/06

(54) **VORRICHTUNG ZUM REINIGEN EINER REIFENINNENFLÄCHE**
DEVICE FOR CLEANING THE INTERIOR OF A TYRE
DISPOSITIF DE NETTOYAGE DE LA SURFACE INTÉRIEURE D'UN PNEUMATIQUE

(30) Priorität: 26.10.2016 DE 102016221012
(43) Veröffentlichungstag der Anmeldung: 02.05.2018
(73) Patentinhaber: Continental Reifen Deutschland GmbH, 30165 Hannover (DE)
(72) Erfinder: Tyburski, Andreas, 31241 Ilsede (DE); Liu, Fei, 30173 Hannover (DE); Dietrich, Holger, 30938 Burgwedel (DE); Kurz, Martin, 30161 Hannover (DE)
(74) Vertreter: Continental Corporation

(56) Entgegenhaltungen:
- EP-A1- 1 604 809
- AT-B- 348 656
- DE-A1-102006 052 292
- DE-U1-202012 104 243

## Beschreibung

Die vorliegende Erfindung bezieht sich auf eine Vorrichtung zum Reinigen einer Reifeninnenfläche eines Luftreifens. Dabei weist die Vorrichtung einen Laser und eine Laserpositioniervorrichtung auf. Dabei ist die Laserpositioniervorrichtung zum Bewegen eines Laserstrahls des Lasers über die Reifeninnenfläche vorgesehen. Dabei weist die Laserpositioniervorrichtung mindestens ein optisches Mittel zur Lenkung des Laserstrahls auf. Die Vorrichtung weist ferner eine Absaugvorrichtung zum Absaugen von mittels des Laserstrahls gelösten Bestandteilen der Reifeninnenfläche auf.

Bei einer Reifeninnenfläche handelt es sich um einen Bereich einer Oberfläche des Luftreifens der einer Reifenaußenfläche gegenüber liegt. Die Reifeninnenfläche liegt dabei radial von einer Rotationsachse des Luftreifens ausgehend räumlich näher zu der Rotationsachse als die Reifenaußenfläche, die, radial von der Rotationsachse ausgehend, von der Rotationsachse und dem Luftreifen weg weist. Die Reifeninnenfläche ist zu der Rotationsachse hin orientiert. Die Rotationsachse ist die Achse, um die der Luftreifen im regulären Betrieb rotiert.

Bei dem Luftreifen kann es sich um einen Luftreifen eines Kraftfahrzeugs oder eines Fahrrads handeln.

Aus dem Stand der Technik sind Vorrichtungen zum Reinigen einer Reifeninnenfläche eines Luftreifens bekannt. Dabei werden zum Reinigen der Reifeninnenfläche beispielsweise Laser verwendet. Mittels eines Lasers können Bestandteile der Reifenoberfläche abgelöst werden.

Beispielsweise wird in der DE 20 2012 104 243 U1 eine Reinigungsvorrichtung zum Entfernen von auf Innenflächen von Fahrzeugreifen vorhandenen Verunreinigungen offenbart. Dabei umfasst die Reinigungsvorrichtung ein Lasersystem. Das Lasersystem umfasst zumindest einen Bearbeitungskopf mit einer integrierten Laseroptik. Dabei ist an der Reinigungsvorrichtung im Bereich des Bearbeitungskopfes eine Absaugung zum Absaugen entfernten Reifenmaterials vorgesehen.

Bei den aus dem Stand der Technik bekannten Vorrichtungen zum Reinigen von Reifeninnenflächen könnte es vorkommen, dass die Reifeninnenfläche nicht ausreichend genug mittels einer Absaugvorrichtung von mittels des Laserstrahls losgelösten Bestandteilen gereinigt wird. Hintergrund dieses Umstands ist, dass die mögliche Absaugvorrichtung hinsichtlich ihres Einsatzortes fest mit dem Einsatzort der Anwendung des Laserstrahls verbunden ist. Ein unabhängiger Einsatz der Absaugvorrichtung von dem Laserstrahl könnte gemäß dem Stand der Technik nur eingeschränkt möglich sein. Ferner könnte es zu dem Umstand kommen, dass bei den aus dem Stand der Technik bekannten Vorrichtungen zum Reinigen einer Reifeninnenfläche der eingesetzte Laser nur mit einer bestimmten Strahlintensität betrieben werden kann. Hintergrund der Beschränkung der Strahlintensität des eingesetzten Lasers kann die Möglichkeit sein, dass die Absaugvorrichtung durch den Laserstrahl beschädigt werden könnte, da die Absaugvorrichtung in unmittelbarer räumlicher Nähe zu dem Laserstrahl eingesetzt wird.

Der Erfindung liegt daher die Aufgabe zugrunde, eine verbesserte Vorrichtung zum Reinigen einer Reifeninnenfläche eines Luftreifens bereitzustellen.

Gelöst wird die gestellte Aufgabe erfindungsgemäß dadurch, dass die Absaugvorrichtung in einem Abstand von der Laserpositioniervorrichtung derart angeordnet ist, dass mittels der Absaugvorrichtung an einem ersten Ort der Reifeninnenfläche losgelöste Bestandteile absaugbar sind während der Laserstrahl an einem zweiten Ort der Reifeninnenfläche zur Lösung von Bestandteilen der Reifeninnenfläche einsetzbar ist. Dabei weisen der erste Ort und der zweite Ort einen Abstand von mindestens 5 cm bis 50 cm voneinander auf.

Durch den erfindungsgemäßen Umstand, wonach die Absaugvorrichtung in einem Abstand von der Laserpositioniervorrichtung derart angeordnet ist, dass mittels der Absaugvorrichtung an einem ersten Ort der Reifeninnenfläche losgelöste Bestandteile absaugbar sind und der Laserstrahl an einem zweiten Ort der Reifeninnenfläche zur Lösung von Bestandteilen der Reifeninnenfläche einsetzbar ist und wobei der erste Ort und der zweite Ort einen Abstand von mindestens 5 cm bis 50 cm voneinander aufweisen, wird eine Absaugvorrichtung bereitgestellt, mit der unabhängig und insbesondere räumlich unabhängig von der Laserpositioniervorrichtung losgelöste Bestandteile der Reifeninnenfläche abgesaugt werden können. Dadurch kann beispielsweise für den Fall, dass an einer Stelle, die bereits mit dem Laser behandelt worden ist und an der losgelöste Bestandteile zurückgeblieben sind, ein Absaugen der losgelösten Bestandteile durchgeführt werden. Diese Absaugung mittels der Absaugvorrichtung an einem Ort der Reifeninnenfläche kann zeitgleich zu und räumlich unabhängig von einer weiteren Bearbeitung der Reifeninnenfläche mittels des Lasers an einem anderen Ort der Reifeninnenfläche vorgenommen werden. Dadurch kann der Einsatz des Lasers und der Absaugvorrichtung und somit der Vorrichtung zu Reinigen der Reifeninnenfläche selbst vielfältiger und flexibler gestaltet werden, als es entsprechend dem Stand der Technik möglich ist.

Darüber hinaus kann der Laser mit einer höheren Intensität und Strahlstärke betrieben werden, als es gemäß dem Stand der Technik möglich ist. Hintergrund der Möglichkeit, dass der Laser mit einer höheren Intensität und Strahlstärke betrieben werden kann ist der Umstand, dass die Absaugvorrichtung räumlich entfernt von dem Laser eingesetzt wird. Dabei ist die Absaugvorrichtung räumlich soweit von dem Laser entfernt einsetzbar, dass der Laser mit höheren Intensitäten und längeren Einsatzdauern betrieben werden kann. Hintergrund ist, dass gegebenenfalls ein Einsatz des Lasers mit höherer Intensität und längerer Dauer notwendig sein kann um die Reifeninnenfläche zu reinigen. Je weiter dabei eine Absaugvorrichtung von dem Laser räumlich entfernt angeordnet und einsetzbar ist, desto geringer ist die Wahrscheinlichkeit einer Beschädigung durch den Laserstrahl des Lasers.

Die Möglichkeit des Betriebs eines Lasers mit höherer Intensität sowie die Möglichkeit einer längeren Einsatzdauer führen dazu, dass der Laser effizienter eingesetzt werden kann.

Insgesamt wird somit eine verbesserte Vorrichtung zum Reinigen einer Reifeninnenfläche eines Luftreifens bereitgestellt.

Hintergrund der Erfindung ist die Vorbereitung einer Reifeninnenfläche eines Laufstreifens für eine Anbringung und Aufbringung von Dichtungsmitteln und Haftmitteln. Bei den Dichtungsmitteln kann es sich insbesondere um selbstabdichtende Dichtungsmittel handeln. Mittels der Vorrichtung zum Reinigen der Reifeninnenfläche können beispielsweise Schmiermittelrückstände oder Antihaftbeschichtungen von der Reifeninnenfläche entfernt werden. Nach Vorbereitung der Reifeninnenfläche durch die Reinigung können sowohl Dichtungsmittel, beispielsweise selbstabdichtende Dichtungsmittel, und Haftmittel und auch Dämpfungselemente an der Reifeninnenfläche angeordnet werden. Dabei sind die Dämpfungselemente zur Dämpfung von Geräuschen vorgesehen, die in einem Innenraum des Luftreifens entstehen können. Durch die Reinigung der Reifeninnenfläche kann eine stabile und mechanisch belastbare Verbindung zwischen der Reifeninnenfläche und beispielsweise den Dämpfungselementen erzeugt werden.

Weitere vorteilhafte Ausgestaltungsformen der Erfindung sind Gegenstand der Unteransprüche.

Gemäß einer Ausführungsform der Erfindung ist die Absaugvorrichtung in einem Abstand von 10 cm bis 25 cm von der Laserpositioniervorrichtung angeordnet. Insbesondere ist die Absaugvorrichtung in einem Abstand von 19 cm bis 25 cm von der Laserpositioniervorrichtung angeordnet

Durch den erfindungsgemäßen Umstand, wonach die Absaugvorrichtung in einem Abstand von 10 cm bis 25 cm von der Laserpositioniervorrichtung angeordnet ist, wird einerseits sichergestellt, dass die mittels des Lasers losgelösten Bestandteile zuverlässig abgesaugt werden. Eine Beeinträchtigung von Komponenten der Vorrichtung wird dadurch vermieden. Andererseits wird bei diesem Abstand der Einsatz des Lasers durch die Absaugvorrichtung selbst nicht gestört.

Gemäß einer nächsten vorzugsweisen Ausgestaltungsform der Erfindung ist die Absaugvorrichtung geeignet, eine Druckdifferenz von 0,04 bar bis 0,9 bar zwischen einem Innenraum der Absaugvorrichtung und einem Bereich der Reifeninnenfläche zu erzeugen. Vorzugsweise ist die Absaugvorrichtung geeignet, eine Druckdifferenz von mindestens 0,04 bar bis 0,9 bar zwischen einem Innenraum der Absaugvorrichtung und einem Bereich der Reifeninnenfläche zu erzeugen.

Durch den erfindungsgemäßen Umstand, wonach die Absaugvorrichtung geeignet ist, eine Druckdifferenz von 0,04 bar bis 0,9 bar zwischen einem Innenraum der Absaugvorrichtung und einem Bereich der Reifeninnenfläche zu erzeugen, wird eine Absaugvorrichtung bereitgestellt, mittels der auf zuverlässige und ausreichende Art losgelöste Bestandteile abgesaugt werden können. Hintergrund ist, dass eine Druckdifferenz von 0,04 bar bis 0,9 bar ausreichend ist um eine Vielzahl losgelöster Bestandteile abzusaugen. Darüber hinaus können gegebenenfalls nur halb oder teilweise gelöste Bestandteile ebenfalls durch den Vorgang der Absaugung losgelöst und von der Reifeninnenfläche entfernt werden.

Gemäß einer nächsten vorzugsweisen Ausgestaltungsform der Erfindung ist mindestens eine weitere Absaugvorrichtung an der Laserpositioniervorrichtung angeordnet. Vorzugsweise ist an der mindestens einen weiteren Absaugvorrichtung eine Schutzvorrichtung angeordnet, wobei die Schutzvorrichtung geeignet ist, die mindestens eine weitere Absaugvorrichtung vor Einwirkung der Laserpositioniervorrichtung und des Laserstrahls zu schützen. Bei der Schutzvorrichtung kann es sich beispielsweise um ein Metallblech und/oder um eine Schutzwand, die aus einem Kunststoff und/oder einem Elastomer ausgebildet, ist handeln.

Dabei können insbesondere an der Absaugvorrichtung und/oder an der mindestens einen weiteren Absaugvorrichtung je eine Schutzvorrichtung angeordnet sein.

Durch den erfindungsgemäßen Umstand, wonach mindestens eine weitere Absaugvorrichtung an der Laserpositioniervorrichtung angeordnet ist, können während des Prozesses des Loslösens von Bestandteilen der Reifeninnenfläche mittels des Laserstrahls die dort losgelösten Bestandteile der Reifeninnenfläche abgesaugt werden. Dies führt zu einer Erhöhung der Effizienz und Wirksamkeit der Vorrichtung zum Reinigen einer Reifeninnenfläche.

Gemäß einer nächsten vorzugsweisen Ausgestaltungsform der Erfindung handelt es sich bei der Absaugvorrichtung und/oder bei der mindestens einen weiteren Absaugvorrichtung um eine kinetisch wirkende Absaugvorrichtung oder um eine auf Basis einer Verdrängung wirkende Absaugvorrichtung handeln. Eine kinetische wirkende Absaugvorrichtung weist beispielsweise eine Turbine oder einen Ventilator zur Erzeugung der Saugwirkung auf. Insbesondere weist die Absaugvorrichtung einen Filter auf, wobei das Filter zur Filterung der mittels des Lasers abgelösten Bestandteile, aus einem mittels der Absaugvorrichtung angesaugten Luftstrom heraus, geeignet ist. Insbesondere handelt es sich bei dem Filter um einen Mikrofilter.

Gemäß der Erfindung weist die Vorrichtung zum Reinigen einer Reifeninnenfläche eine Steuervorrichtung auf. Dabei ist die Steuervorrichtung zur Steuerung der Absaugvorrichtung vorgesehen. Bei einer Steuervorrichtung handelt es sich um eine elektronisch programmierbare und selbstständig arbeitende Kontrolleinheit. Im Rahmen der Steuerung der Laserpositioniervorrichtung können beispielsweise die Art der Anwendung, die Schnelligkeit der Anwendung und die zeitliche Dauer der Anwendung der Laserpositioniervorrichtung kontrolliert und gesteuert werden. Im Rahmen der Steuerung des Laserstrahls können insbesondere dessen Strahlstärke, seine Intensität oder seine Frequenz eingestellt werden.

Im Rahmen des Betriebs des Lasers können ferner insbesondere Eigenschaften des Einsatzes des Lasers vorgegeben, eingestellt und kontrolliert werden. Zu den Eigenschaften des Einsatzes des Lasers gehören beispielsweise eine gepulste Betriebsart des Lasers oder eine zeitliche Dauer des Einsatzes des Lasers insgesamt.

Bei der Art des Betriebs der Steuerung der Absaugvorrichtung oder der mindestens einen weiteren Absaugvorrichtung können insbesondere die Druckdifferenz, mit der die Absaugvorrichtungen losgelöste Bestandteile absaugen sollen, oder die zeitliche Dauer oder der Ort des Einsatzes der Absaugvorrichtungen gesteuert und eingestellt werden. Eine elektronische Steuerung lässt eine, von einem möglichen Nutzer der Vorrichtung zur Reinigung der Reifeninnenfläche unabhängige, automatische Bedienung der Vorrichtung zur Reinigung zu. Ferner lässt eine Steuervorrichtung eine Bearbeitung einer Vielzahl von die Bedingungen der Reifenoberfläche oder die Betriebsart der Vorrichtung zur Reinigung betreffenden Parametern zu. Dabei können die Bearbeitung dieser Parameter und die davon abhängige Bedienung der Vorrichtung zur Reinigung rascher und genauer erfolgen, als es beispielsweise auf dem Weg einer manuellen Bedienung der Vorrichtung zur Reinigung durch einen menschlichen Nutzer möglich sein kann.

Gemäß einer weiteren vorzugsweisen Ausgestaltungsform der Erfindung weist die Vorrichtung eine Positionsmessvorrichtung auf. Dabei ist die Positionsmessvorrichtung zur Bestimmung der Position des Laserstrahls und/oder eines Ortes auf der Reifeninnenfläche und/oder der Position der Absaugvorrichtung und/oder der Position der mindestens einen weiteren Absaugvorrichtung geeignet und vorgesehen.

Durch den erfindungsgemäßen Umstand, wonach die Vorrichtung eine Positionsmessvorrichtung aufweist, wobei die Positionsmessvorrichtung zur Bestimmung der Position des Laserstrahls und/oder eines Ortes auf der Reifeninnenfläche und/oder der Position der Absaugvorrichtung und/oder der Position der mindestens einen weiteren Absaugvorrichtung geeignet und/oder vorgesehen ist, wird eine kontrollierte Durchführung der Anwendung der Vorrichtung sichergestellt.

Bei einer erfindungsgemäßen Positionsmessvorrichtung kann es sich insbesondere um eine Kamera oder um eine Lasermessvorrichtung handeln. Eine Lasermessvorrichtung funktioniert auf Basis eines Laserstrahls, mit dem insbesondere über Laufzeitmessungen des Laserstrahls räumliche Abstande und Positionen bestimmt werden können.

Weitere Merkmale, Vorteile und Einzelheiten, auf die die Erfindung in ihrem Umfang aber nicht beschränkt ist, werden nun anhand der Zeichnungen näher beschrieben.

Es zeigt:
- Fig. 1: eine schematische Darstellung eines Luftreifens;
- Fig. 2: eine schematische Darstellung einer Vorrichtung zum Reinigen einer Reifeninnenfläche gemäß einer ersten Ausführungsform;
- Fig. 3: eine schematische Darstellung einer Vorrichtung zum Reinigen einer Reifeninnenfläche gemäß einer zweiten Ausführungsform;
- Fig. 4: eine schematische Darstellung einer erfindungsgemäßen Vorrichtung zum Reinigen einer Reifeninnenfläche gemäß einer dritten Ausführungsform.

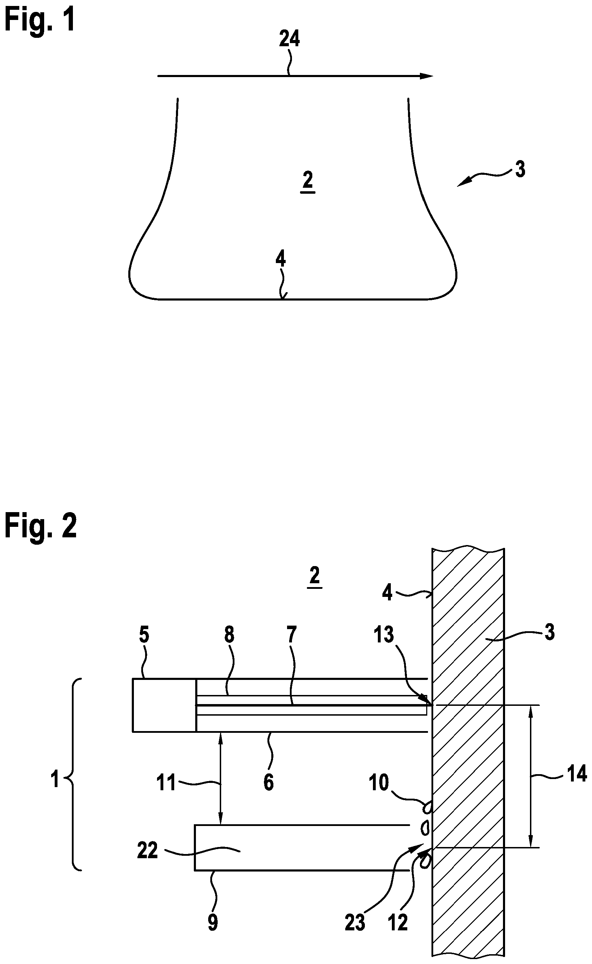

In der Figur 1 ist ein Luftreifen 3 in Radialschnittansicht schematisch dargestellt. Der Luftreifen 3 ist radialsymmetrisch bezüglich einer Rotationsachse 24 um die der Luftreifen 3 rotieren kann. Der Luftreifen 3 weist einen Innenraum 2 auf. Der Innenraum 2 wird durch die Reifeninnenfläche 4 gebildet. Bei dem Luftreifen 3 kann es sich um einen Kraftfahrzeugluftreifen oder um einen Fahrradluftreifen handeln.

In der Figur 2 ist eine Vorrichtung zum Reinigen einer Reifeninnenfläche eines Luftreifens schematisch dargestellt. Die Vorrichtung 1 kann insbesondere im Innenraum 2 eines Luftreifens 3 angeordnet werden. Der Luftreifen 3 weist eine Reifeninnenfläche 4 auf. Der Innenraum 2 wird durch die Reifeninnenfläche 4 gebildet.

Die Vorrichtung 1 weist einen Laser 5 und eine Laserpositioniervorrichtung 6 auf. Die Laserpositioniervorrichtung 6 ist zum Bewegen eines Laserstrahls 7 des Lasers 5 über die Reifeninnenfläche 4 geeignet. Dabei ist die Laserpositioniervorrichtung 6 derart ausgebildet, dass sie mindestens ein optisches Mittel zur Lenkung des Laserstrahls 7 aufweist. Bei dem optischen Mittel kann es sich beispielsweise um eine optische Faser 8 und/oder um mindestens einen Spiegel handeln. Gemäß der in der Figur 2 schematisch dargestellten Ausführungsform handelt es sich bei dem optischen Mittel um eine optische Faser 8 Die Vorrichtung 1 weist darüber hinaus eine Absaugvorrichtung 9 auf. Die Absaugvorrichtung 9 ist zur Absaugung von mittels des Laserstrahls 7 gelösten Bestandteilen 10 der Reifeninnenfläche 4 vorgesehen. Dabei ist die Absaugvorrichtung 9 in einem Abstand 11 von der Laserpositioniervorrichtung 6 derart angeordnet, dass mittels der Absaugvorrichtung 9 an einem ersten Ort 12 der Reifeninnenfläche losgelöste Bestandteile 10 absaugbar sind. Dabei ist der Laserstrahl 7 an einem zweiten Ort 13 der Reifeninnenfläche 4 zur Lösung von Bestandteilen der Reifeninnenfläche 4 einsetzbar. Dabei weisen der erste Ort 12 und der zweite Ort 13 einen Abstand 14 von mindestens 5 cm bis 50 cm voneinander auf.

Die Absaugvorrichtung 9 ist insbesondere geeignet, eine Druckdifferenzenz von 0,04 bar bis 0,9 bar zwischen einem Innenraum 22 der Absaugvorrichtung 9 und einem Bereich 23 der Reifeninnenfläche 4 zu erzeugen.

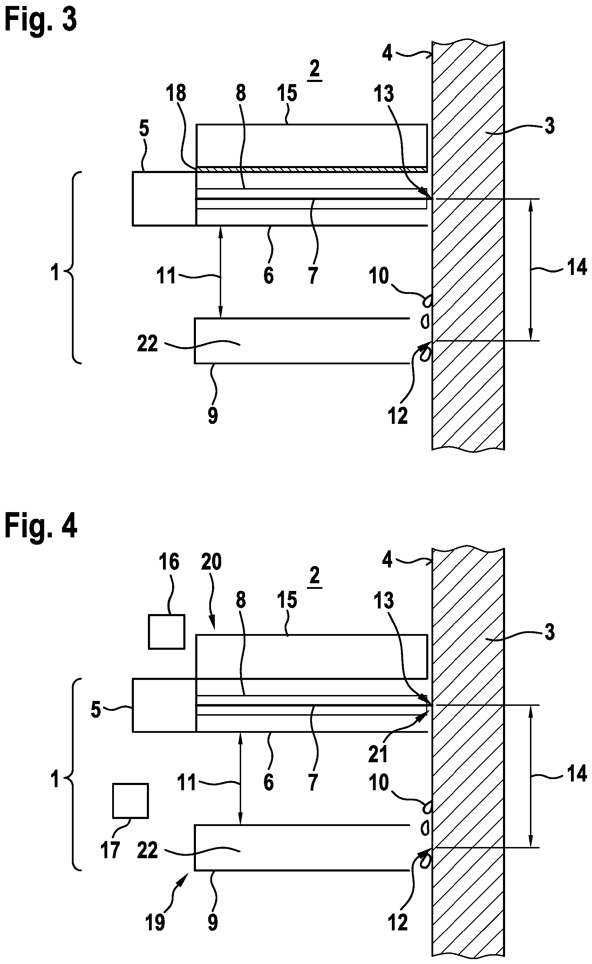

In der Figur 3 ist eine Vorrichtung 1 zum Reinigen einer Reifeninnenfläche 4 eines Luftreifens 3 gemäß einer zweiten Ausführungsform schematisch dargestellt. Gemäß der in der Figur 3 schematisch dargestellten Ausführungsform ist mindestens eine weitere Absaugvorrichtung 15 an der Laserpositioniervorrichtung 6 angeordnet. Mittels der mindestens einen weiteren Absaugvorrichtung 15 können mittels des Laserstrahls 7 herausgetrennte und losgelöste Bestandteile der Reifeninnenfläche 4 direkt und unmittelbar nach der Herauslösung durch den Laserstrahl 7 abgesaugt werden. Die mindestens eine weitere Absaugvorrichtung 15 kann insbesondere mittels einer Schutzvorrichtung 18 vor einer möglichen Beschädigung durch den Laserstrahl 7 geschützt werden.

In der Figur 4 ist eine erfindungsgemäße Vorrichtung 1 zum Reinigen einer Reifeninnenfläche 4 eines Luftreifens 3 gemäß einer dritten Ausführungsform schematisch dargestellt. Gemäß der in der Figur 4 schematisch dargestellten Ausführungsform weist die Vorrichtung 1 eine Steuervorrichtung 16 auf. Dabei ist die Steuervorrichtung 16 zur Steuerung der Absaugvorrichtung 9 vorgesehen.

Vorzugsweise kann zusätzlich eine Positionsmessvorrichtung 17 an der Vorrichtung 1 angeordnet sein. Dabei ist die Positionsmessvorrichtung 17 zur Bestimmung einer Position 21 des Laserstrahls 7 und/oder eines Ortes auf der Reifeninnenfläche 4 und/oder der Position 19 der Absaugvorrichtung 9 und/oder der Position 20 der mindestens einen weiteren Absaugvorrichtung 15 geeignet und/oder vorgesehen.

### Bezugszeichenliste

### (Teil der Beschreibung)

- 1: Vorrichtung
- 2: Innenraum eines Luftreifens
- 3: Luftreifen
- 4: Reifeninnenfläche
- 5: Laser
- 6: Laserpositioniervorrichtung
- 7: Laserstrahl
- 8: Optisches Mittel
- 9: Absaugvorrichtung
- 10: Losgelöste Bestandteile
- 11: Abstand zwischen Absaugvorrichtung und Laserpositioniervorrichtung
- 12: Erster Ort auf der Reifeninnenfläche
- 13: Zweiter Ort auf der Reifeninnenfläche
- 14: Abstand zwischen dem ersten Ort und dem zweiten Ort auf der Reifeninnenfläche
- 15: Weitere Absaugvorrichtung
- 16: Steuervorrichtung
- 17: Positionsmessvorrichtung
- 18: Schutzvorrichtung
- 19: Position der Absaugvorrichtung
- 20: Position der weiteren Absaugvorrichtung
- 21: Position des Laserstrahls
- 22: Innenraum der Absaugvorrichtung
- 23: Bereich der Reifeninnenfläche
- 24: Rotationsachse

## Patentansprüche

1. Vorrichtung (1) zum Reinigen einer Reifeninnenfläche (4) eines Luftreifens (3), aufweisend einen Laser (5) und eine Laserpositioniervorrichtung (6) zum Bewegen eines Laserstrahls (7) des Lasers (5) über die Reifeninnenfläche (4), wobei die Laserpositioniervorrichtung (6) mindestens ein optisches Mittel (8) zur Lenkung des Laserstrahls (7) aufweist, und aufweisend eine Absaugvorrichtung (9) zur Absaugung von mittels des Laserstrahls (7) gelösten Bestandteilen (10) der Reifeninnenfläche (4), wobei die Absaugvorrichtung (9) in einem Abstand (11) von der Laserpositioniervorrichtung (6) derart angeordnet ist, dass mittels der Absaugvorrichtung (9) an einem ersten Ort (12) der Reifeninnenfläche (4) losgelöste Bestandteile (10) absaugbar sind und der Laserstrahl (7) an einem zweiten Ort (13) der Reifeninnenfläche (4) zur Lösung von Bestandteilen (10) der Reifeninnenfläche (4) einsetzbar ist und wobei der erste Ort (12) und der zweite Ort (13) einen Abstand (14) von mindestens 5 cm bis 50 cm voneinander aufweisen, **dadurch gekennzeichnet, dass** die Vorrichtung eine Steuervorrichtung (16) aufweist, wobei die Steuervorrichtung (16) zur Steuerung der Absaugvorrichtung (9) vorgesehen ist, wobei es sich bei der Steuervorrichtung (16) um eine elektronisch programmierbare und selbstständig arbeitende Kontrolleinheit handelt.

2. Vorrichtung (1) nach dem vorhergehenden Anspruch, **dadurch gekennzeichnet, dass** die Absaugvorrichtung (9) in einem Abstand (11) von 10 cm bis 25 cm von der Laserpositioniervorrichtung (6) angeordnet ist.

3. Vorrichtung (1) nach einem der vorhergehenden Ansprüche, **dadurch gekennzeichnet, dass** die Absaugvorrichtung (9) geeignet ist, eine Druckdifferenz von 0,04 bar bis 0,9 bar zwischen einem Innenraum (22) der Absaugvorrichtung (9) und einem Bereich (23) der Reifeninnenfläche (4) zu erzeugen.

4. Vorrichtung (1) nach einem der vorhergehenden Ansprüche, **dadurch gekennzeichnet, dass** mindestens eine weitere Absaugvorrichtung (15) an der Laserpositioniervorrichtung (6) angeordnet ist.

5. Vorrichtung (1) nach einem der vorhergehenden Ansprüche, **dadurch gekennzeichnet, dass** es sich bei der Absaugvorrichtung (9) und/oder bei der mindestens einen weiteren Absaugvorrichtung (15) nach dem vorhergehenden Anspruch um eine kinetisch wirkende Absaugvorrichtung (15) oder um eine auf Basis einer Verdrängung wirkende Absaugvorrichtung (15) handelt.

6. Vorrichtung (1) nach einem der vorhergehenden Ansprüche, aufweisend eine Positionsmessvorrichtung (17), wobei die Positionsmessvorrichtung (17) zur Bestimmung der Position (21) des Laserstrahls (7) und/oder eines Orts (12, 13) auf der Reifeninnenfläche (4) und/oder der Position (19) der Absaugvorrichtung (9) und/oder der Position (91) der mindestens einen weiteren Absaugvorrichtung (15) geeignet und/oder vorgesehen ist.

## Claims

1. Device (1) for cleaning an inner tyre surface (4) of a pneumatic tyre (3), having a laser (5) and a laser positioning device (6) for moving a laser beam (7) of the laser (5) over the inner tyre surface (4), the laser positioning device (6) having at least one optical means (8) for directing the laser beam (7), and having a suction-removal device (9) for the suction removal of constituents (10) of the inner tyre surface (4) that are detached by means of the laser beam (7), the suction-removal device (9) being arranged at a distance (11) from the laser positioning device (6) in such a way that constituents (10) detached at a first location (12) of the inner tyre surface (4) can be removed by means of the suction-removal device (9) and the laser beam (7) can be used at a second location (13) of the inner tyre surface (4) for detaching constituents (10) of the inner tyre surface (4), and the first location (12) and the second location (13) being at a distance (14) from one another of at least 5 cm to 50 cm, **characterized in that** the device has a control device (16), the control device (16) being intended for controlling the suction-removal device (9), the control device (16) being an electronically programmable and automatically operating control unit.

2. Device (1) according to the preceding claim, **characterized in that** the suction-removal device (9) is arranged at a distance (11) of 10 cm to 25 cm from the laser positioning device (6).

3. Device (1) according to one of the preceding claims, **characterized in that** the suction-removal device (9) is suitable for producing a pressure difference of 0.04 bar to 0.9 bar between an interior space (22) of the suction-removal device (9) and a region (23) of the inner tyre surface (4).

4. Device (1) according to one of the preceding claims, **characterized in that** at least one further suction-removal device (15) is arranged on the laser positioning device (6).

5. Device (1) according to one of the preceding claims, **characterized in that** the suction-removal device (9) and/or the at least one further suction-removal device (15) according to the preceding claim is a kinetically acting suction-removal device (15) or a suction-removal device (15) acting on the basis of a displacement.

6. Device (1) according to one of the preceding claims, having a position measuring device (17), the position measuring device (17) being suitable and/or intended for determining the position (21) of the laser beam (7) and/or a location (12, 13) on the inner tyre surface (4) and/or the position (19) of the suction-removal device (9) and/or the position (91) of the at least one further suction-removal device (15).

## Revendications

1. Dispositif (1) servant à nettoyer une surface intérieure de pneumatique (4) d'un pneumatique (3), présentant un laser (5) et un dispositif de positionnement de laser (6) servant à déplacer un faisceau laser (7) du laser (5) sur la surface intérieure de pneumatique (4), le dispositif de positionnement de laser (6) présentant au moins un moyen optique (8) pour diriger le faisceau laser (7), et présentant un dispositif d'aspiration (9) servant à aspirer des composants (10) de la surface intérieure de pneumatique (4) détachés au moyen du faisceau laser (7), le dispositif d'aspiration (9) étant disposé à une distance (11) du dispositif de positionnement de laser (6) de telle sorte que des composants détachés (10) à un premier endroit (12) de la surface intérieure de pneumatique (4) peuvent être aspirés au moyen du dispositif d'aspiration (9), et que le faisceau laser (7) peut être mis en œuvre à un deuxième endroit (13) de la surface intérieure de pneumatique (4) pour détacher des composants (10) de la surface intérieure de pneumatique (4), et le premier endroit (12) et le deuxième endroit (13) présentant une distance (14) d'au moins 5 cm à 50 cm l'un de l'autre,
**caractérisé en ce que** le dispositif présente un dispositif de commande (16), le dispositif de commande (16) étant prévu pour commander le dispositif d'aspiration (9), le dispositif de commande (16) étant une unité de contrôle à programmation électronique et à fonctionnement autonome.

2. Dispositif (1) selon la revendication précédente, **caractérisé en ce que** le dispositif d'aspiration (9) est disposé à une distance (11) de 10 cm à 25 cm du dispositif de positionnement de laser (6).

3. Dispositif (1) selon l'une quelconque des revendications précédentes, **caractérisé en ce que** le dispositif d'aspiration (9) est adapté pour générer une différence de pression de 0,04 bar à 0,9 bar entre un espace intérieur (22) du dispositif d'aspiration (9) et une zone (23) de la surface intérieure de pneumatique (4) .

4. Dispositif (1) selon l'une quelconque des revendications précédentes, **caractérisé en ce qu'**au moins un autre dispositif d'aspiration (15) est disposé sur le dispositif de positionnement de laser (6).

5. Dispositif (1) selon l'une quelconque des revendications précédentes, **caractérisé en ce que** le dispositif d'aspiration (9) et/ou ledit au moins un autre dispositif d'aspiration (15) selon la revendication précédente est un dispositif d'aspiration (15) à effet cinétique ou un dispositif d'aspiration (15) agissant sur la base d'un refoulement.

6. Dispositif (1) selon l'une quelconque des revendications précédentes, présentant un dispositif de mesure de position (17), le dispositif de mesure de position (17) étant adapté et/ou prévu pour déterminer la position (21) du faisceau laser (7) et/ou d'un endroit (12, 13) sur la surface intérieure de pneumatique (4) et/ou la position (19) du dispositif d'aspiration (9) et/ou la position (91) de l'au moins un autre dispositif d'aspiration (15).
